# EUROPEAN PATENT SPECIFICATION

(11) **EP 1 107 198 B1**
(45) Date of publication and mention of the grant of the patent: **10.01.2007**
(21) Application number: 00204234.9
(22) Date of filing: 29.11.2000
(51) Int. Cl.: G07F 7/10, G07F 19/00, G06Q 20/00

(54) **System and method for performing an electronic transaction using a transaction proxy with an electronic wallet**
System und Verfahren zur Durchführung einer elektronischen Transaktion mit einer elektronischen Geldbörse mittels eines Transaktionproxys
Système et méthode pour effectuer une transaction électronique avec un portefeuille électronique à l'aide d'un mandataire de transaction

(30) Priority: 30.11.1999 US 168031 P; 18.05.2000 US 205318 P
(43) Date of publication of application: 13.06.2001
(73) Proprietor: CITIBANK, NA, New York, New York 10022 (US)
(72) Inventor: Young, Alan, New Canaan, CT 06840 (US); Chapman, Philip, Tokyo 153-0062 (JP); Berardy, Robert, Tokyo 141-0022 (JP)
(74) Representative: Johansson, Lars-Erik

(56) References cited:
- EP-A- 0 899 674
- EP-A- 0 917 119
- WO-A-96/32700
- WO-A-97/45814
- US-A- 5 699 528
- US-A- 5 710 887
- US-A- 5 937 391
- US-A- 5 991 749
- MANHART P ET AL: "Group interaction in Web-based multimedia market places" SYSTEM SCIENCES, 1998., PROCEEDINGS OF THE THIRTY-FIRST HAWAII INTERNATIONAL CONFERENCE ON KOHALA COAST, HI, USA 6-9 JAN. 1998, LOS ALAMITOS, CA, USA,IEEE COMPUT. SOC, US, 6 January 1998 (1998-01-06), pages 645-654, XP010262831 ISBN: 0-8186-8255-8
- HO GEUN LEE: "Electronic market intermediary: transforming technical feasibility into institutional reality" SYSTEM SCIENCES, 1997, PROCEEDINGS OF THE THIRTIETH HWAII INTERNATIONAL CONFERENCE ON WAILEA, HI, USA 7-10 JAN. 1997, LOS ALAMITOS, CA, USA,IEEE COMPUT. SOC, US, 7 January 1997 (1997-01-07), pages 3-12, XP010271877 ISBN: 0-8186-7743-0
- KURAMITSU K ET AL: "Digiket: decentralized architecture for worldwide electronic market" COMPUTER SOFTWARE AND APPLICATIONS CONFERENCE, 1999. COMPSAC '99. PROCEEDINGS. THE TWENTY-THIRD ANNUAL INTERNATIONAL PHOENIX, AZ, USA 27-29 OCT. 1999, LOS ALAMITOS, CA, USA,IEEE COMPUT. SOC, US, 27 October 1999 (1999-10-27), pages 430-435, XP010365475 ISBN: 0-7695-0368-3
- YAN G ET AL: "Internet-the future delivery channel for banking services?" SYSTEM SCIENCES, 1998., PROCEEDINGS OF THE THIRTY-FIRST HAWAII INTERNATIONAL CONFERENCE ON KOHALA COAST, HI, USA 6-9 JAN. 1998, LOS ALAMITOS, CA, USA,IEEE COMPUT. SOC, US, 6 January 1998 (1998-01-06), pages 290-299, XP010263090 ISBN: 0-8186-8255-8

## Description

### CROSS REFERENCE TO RELATED APPLICATIONS

This application relates to applicant's co-pending applications having U.S. Serial No. 09/396,242, filed September 15, 1999, and U.S. Serial No. 09/190,933, filed November 12, 1998.

This application also relates to applicant's co-pending application entitled "System and Method for Performing a Transaction Using a Transaction Proxy With an Electronic Wallet," having U.S. Serial No. 60/168,031, filed November 30, 1999, to which the present application claims priority.

This application further related to applicant's co-pending application entitled "System and Method for Performing a Transaction Using a Transaction Proxy With an Electronic Wallet," having U.S. Serial No. 60/205,318, filed May 18, 2000, to which the present application also claims priority.

### Field of the Invention

The present invention relates generally to the field of electronic commerce. More particularly, the present invention relates to a method and system for performing a transaction using an interface-enabled communication device, such as a browser-enabled wireless telephone.

### Background

Conventionally, certain wireless telephone providers offer wireless phones that are capable of browsing at least defined aspects of the Internet. For example, the world's largest cellular telephone provider located in Japan provides a service that allows its subscribers to browse a subset of the Internet using a cellular telephone. The provided services uses Internet protocols, but allows access to a subset of the Internet that specifically complies with the cellular telephone provider's gateway specifications, which is HTML (Hypertext Mark-up Language) 1.0 (but with no frames, no Java and no "cookie" capability). The service offered by the Japanese cellular telephone provider and similar services have been very successful. The number of subscribers to the service provided by the Japanese provider is expected to mushroom in the coming years to tens of millions.

Content providers, merchants, and others provide Internet content that is accessible using cellular-telephone-based browsers. For example, numerous financial institutions, such as banks, offer interactive content to cellular telephone systems that allow users to carry out activities such as examining their account balance, examining past transactions, and making payments and transfers through the system. In addition, other institutions, such as brokerages, provide interactive content in such systems that enable users to carry out various other activities, such as trading stocks, viewing general trading-related content, and other activities.

Despite their growing popularity, conventional mobile telephone Internet browsing systems have a disadvantages in connection with electronic commerce. One reason that electronic commerce is a problematic issue in conventional systems is the difficulty of using the remote actuating mechanism at the moment of purchasing goods or services using a mobile telephone device. For example, the entry by a user of shipping details, credit card number, and other information that is usually requested by merchants on their Internet sites is impractical using conventional wireless telephone Internet browsing systems.

WO 97/45814 discloses a system where mobile wallet phones, mobile network base station terminals, mobile networks and host computers are utilized to enable a payer to make payments to a payee.

However, that known system presents some disadvantages, e.g. that the details of the product has to be received by the payees or banks computer and does require customers to have special "mobile wallet phones" equipped internally with an electronic wallet application, making the performance of a transaction complex and inflexible in certain aspects.

### SUMMARY

Methods and systems according to the present invention include methods and systems for performing electronic transactions, including such transactions using a wireless communications device, such as a browser-enabled wireless telephone. In an embodiment, a merchant offers a product for purchase and displays selection data, such as a product code, along with the product. A customer views the product and logs into an electronic portal (e.g. provides identification information, such as a user name and password). The customer then transmits selection data, i.e., the product code, identifying the product to an electronic portal from an interface-enabled communications device, such as a wireless telephone. The portal accesses a product database associated with the merchant offering the product. This access is carried out through check-out software residing on a web site of the merchant. The portal provides product information data from the database comprising information describing at least one aspect of the product (e.g., price, color, and size) to the wireless telephone. The customer views the information and indicates a decision to purchase the product.

When the portal receives a signal indicating the customer's decision to purchase, the portal accesses an electronic wallet associated with the customer and obtains shipping detail data and payment option data describing a desired means of payment for the product (e.g., credit card, debit card, or customer account). The portal then transmits payment authorization to a payment processor (e.g., the issuer of the customer's credit card), wherein the payment authorization comprises purchaser identifying data and merchant identifying data identifying the merchant. The portal also transmits shipping detail data and payment option data to the merchant, wherein the order information comprises payment option data and shipping detail data. The portal provides an order confirmation to the customer, and the merchant sends the product to the customer. The merchant receives payment via a settlement system with which the payment processor interacts. In other embodiments, the interface-enabled communications device comprises a telephone, a personal computer, or a personal digital assistant.

In an embodiment, the user-identifying data and the purchase-selection data is received from the interface-enabled communications device in the communications gateway, and such data is then transmitted from the communications gateway to the electronic portal.

Also, in an embodiment, the operator of the wireless communications gateway (e.g., a mobile telephone network operator) and the operator of the portal (e.g., a bank, who also operates the electronic wallet application) enter into a joint venture in relation to the portal. The bank provides credit and financial services related to the joint venture, including the check-out software made available to the merchants, as well as providing the portal, and the mobile telephone network operator provides merchant relationships and a customer base. The mobile telephone network operator also contributes its knowledge of the name and addresses of its subscribers, as well as their credit ratings.
In such an embodiment, the portal serves as a Internet portal to Internet content providers that subscriber's to the network may access with the browsing function of their telephones. The portal comprises hyperlinks to the web sites of such content providers and includes hyperlinks to pages within the portal that includes content from at least some of the content providers. The content providers have contracted with the operator of the electronic gateway to provide content and to provide a commission payment to the operator of the electronic gateway when the operator's subscribers access the content and/or pay for services offered by the content provider. Moreover, the content providers have contracted with the operator of the electronic gateway to bill the subscribers for services of the content providers accessed by the subscribers via its billing for mobile telephone service.

A variety of means of payment may be used with embodiments according to the present invention. Examples include credit card accounts, debit card accounts, savings accounts, checking accounts, and other payment accounts. Embodiments of the present invention provide a wide variety of features and advantages. It is a feature and advantage of the present invention to provide a method and system for performing a transaction, such as an Internet purchase, using a wireless communication device, such as a browser-enabled wireless telephone.

It is a feature and advantage of the present invention to provide a marketplace in which buyers utilize either a mobile or fixed wireless communication device, such as a browser-enabled wireless telephone, to initiate and complete a transaction, and in which buyers, sellers and their respective financial institutions meet virtually (as opposed to being in physical proximity) to complete a secure transaction where both trust and value are present.

It is another feature and advantage of the present invention to provide a method and system for performing a transaction with a wireless communication device which enables a buyer to access a merchant's product database to view product (goods and services) information by entering a unique merchant and product code utilizing the wireless communication device.

It is an additional feature and advantage of the present invention to provide a method and system for performing a transaction using a wireless communication device, which enables customizing the product from a 'choice board', which is an interactive, on-line system that allows buyers to design their own products from a menu of attributes, components, prices, and delivery options utilizing the wireless communication device.

It is still another feature and advantage of the present invention to provide a method and system for performing a transaction using a wireless communication device, which enables a buyer to interact with a merchant's order fulfillment system to place product orders utilizing an electronic wallet from the wireless communication device, which electronic wallet holds the buyer's personal information (such as, but not limited to, shipping and payment information) and automatically completes the fields in the merchant's order fulfillment database.

It is a still further feature and advantage of the present invention to provide a method and system for performing a transaction using a wireless communication device that enables authentication of the transacting parties, provides authorization for the transaction, ensures the integrity, privacy and confidentiality of information between the transacting parties, and non-repudiation of the transaction by parties to the transaction.

It is still another feature and advantage of the present invention to provide a method and system for performing a transaction using a wireless communication device which enables one individual to transact with or pay another individual who is not an acquired merchant of the system utilizing the wireless communications device.

To achieve the stated features, advantages and objects, an embodiment of the present invention provides a method and system for completion of a mercantile transaction which is defined as the exchange of information between the buyer and seller followed by the necessary payment an embodiment of the present invention uses an electronic gateway that connects the user, the merchant and their respective financial institutions using a combination of the wireless and wired networks. To access a wireless communication device service, the user must complete a service contract application with the wireless network operator. Through a mutual agreement, the services of the gateway operator are bundled with the network operators services, enabling seamless account opening for both services at the same time. The gateway operator provides the user with an electronic wallet that is stored inside the gateway, and accessed by the user from the user's wireless communication device.

In an embodiment of the present invention, the electronic wallet is a secure container and storage space in which a user's shopping and payment information is stored. Supply chain technology developed by merchants and their suppliers are based on universal product codes (UPC), intranets, and databases. The gateway operator acts as a merchant acquirer connecting the merchants product and order fulfillment databases via the wireless or wired Internet. The gateway operator supplies the merchant with a unique merchant code, that the merchant combines with their existing UPC. The merchant then places this code on their product price labels.

Another feature and advantage of embodiments of the present invention comprises providing a method and system for payment or funds transfer between two parties, neither of whom are acquired merchants of the system. It is a related feature and advantage of embodiments of the present invention to provide methods and systems whereby parties who are not in geographic proximity to one another to deliver payment to one another quickly.

Additional objects, advantages and novel features of the invention will be set forth in part in the description which follows, and in part will become more apparent to those skilled in the art upon examination of the following, or may be learned by practice of the invention.

### BRIEF DESCRIPTION OF THE FIGURES

FIG. 1 shows an embodiment of a system according to the present invention.
FIG. 2 shows further illustration of the system of FIG. 1.
FIG. 3 shows a flow diagram of steps according to the present invention carried out in the system of FIG. 1 and FIG. 2.
FIG. 4 shows an embodiment of a person-to-person payment transfer system according to the present invention.
FIG. 5 shows a flow diagram of steps according to the present invention carried out in the system of FIG. 4.

### DETAILED DESCRIPTION

Embodiments of the present invention include methods and systems for carrying out electronic commerce transactions using an electronic communications device, such as a mobile telephone. One such embodiment comprises a method and system for performing an electronic transaction via a mobile telephone using a transaction proxy with an electronic wallet.

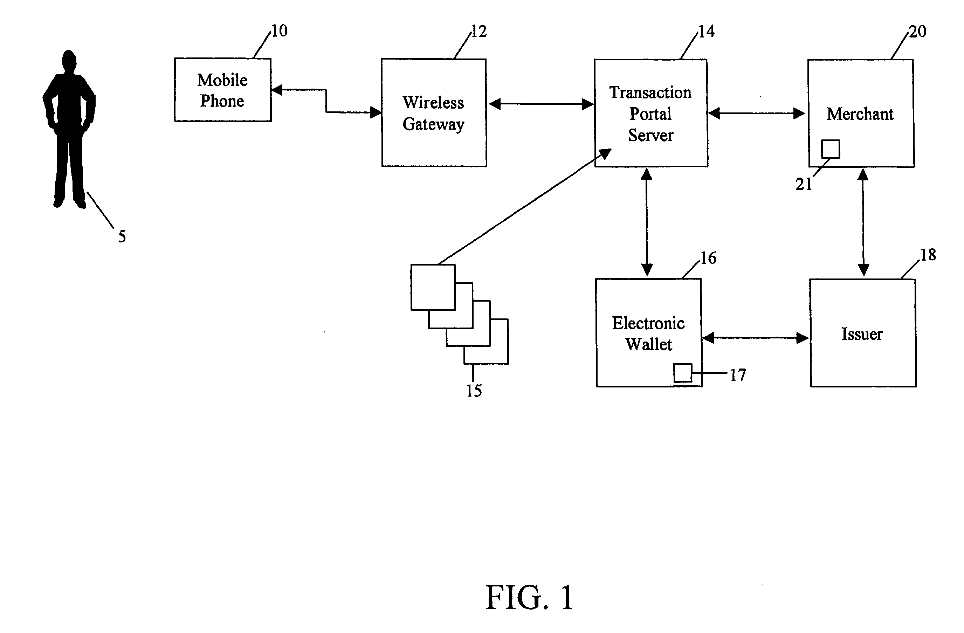

FIG. 1 shows such a system according to the present invention. Referring to FIG. 1, an individual 5 is shown having an electronic communications device 10. In the embodiment shown, the electronic communications device is a mobile telephone 10. The mobile telephone 10 shown is interface enabled in that it includes the hardware, communications software, and browser software needed to access, receive, and browse content from the Internet. The telephone 10 includes a display screen for displaying content from the Internet. For example, a high-resolution liquid crystal display (LCD) is used as the display screen. where all the information is shown for the user. In other embodiments, the interface-enabled communications device comprises a personal computer having web-browser software, a personal digital assistant having web-browser software, or other electronic device.

The mobile telephone 10 is in communication with a wireless gateway 12. The wireless gateway 12 shown comprises a mobile switching center (or mobile telephone switching office) and communication facilities allowing the gateway to communicate via a computer network, such as the Internet. The wireless gateway 12 is in communication via the Internet with a transaction portal server 14 (or transaction proxy). The transaction portal server 14 includes files (software) comprising an electronic transaction portal 15.

The electronic transaction portal 15 comprises an electronic mall. The portal 15 comprises web pages of the type viewable on the display screen of the mobile telephone (e.g., HTML 1.0, a reduced HTML, or Wireless Application Protocol (WAP)), interactive content, and communication software for facilitating communication with the portal, and applications for carrying out processes by the portal, as described herein. A plurality of merchant web sites, including one on the shown merchant server 20, are accessible via the portal 15. As an example, the home page of the portal 15 includes a list of accessible, or participating, merchant sites. The merchant is shown as item 20, and includes a merchant web server in communication with the Internet.

The portal 15 includes check-out software that provides purchase interaction viewable on the display screen of a mobile telephone. In addition, in the embodiment shown, each of the merchants participating in the portal are given such check-out software for inclusion on their merchant web site 21. The check-out software provided to the merchants is programmed to interact with the merchants' product database and order-fulfillment facilities. The check-out software residing on the web sites of the merchants is in communication with the portal. Moreover, pages of the portal provide hyperlinks to the web sites of various member merchants.

The transaction portal server 14 is in communication via the Internet with an electronic wallet server 16 comprising an electronic wallet application 17, which comprises electronic wallets of various persons.
In particular, the electronic wallet application 17 comprises the electronic wallet used by the mobile telephone user 5, and contains personal information of the user 5 (such as the user's name, address, and credit card number, type, and expiration date). In other embodiments, the electronic wallet application resides on the transaction portal server 14. The electronic wallet server 16 is in communication via the Internet with one or more credit card issuers, in particular the credit card issuer for the credit card of the mobile telephone user 5 indicated in the personal information of the user 5 contained in the electronic wallet used by the user 18. In the embodiment shown, the issuer 18 is a financial institution, namely a bank. Each of the subscribers to the wireless gateway 12 is provided an electronic wallet on the wallet server 16. In such an embodiment, the operator of the transaction portal may provide all subscribers to the wireless gateway membership in the portal based on the personal information obtained by the gateway operator, may request further information from the user directly or through the gateway operator, or may provide membership to only a pre-selected subset of subscribers. Each subscriber is assigned a unique user name (or identification number) and password for their electronic wallet. In the embodiment shown, the user name assigned comprises the mobile telephone number of the subscriber. The password is assigned at random, and may be changed by the subscriber. In an embodiment, the subscribers of the gateway 12 are automatically billed for their mobile telephone service via their electronic wallet on the server 16.

Additionally, the financial institution / operator of the portal issues each subscriber that becomes a member of the portal a payment product (e.g., a credit card account or a debit account). Thus, rather than the users applying for a payment product from the financial institution, and having their credit checked by the financial institution, the payment product is issued automatically based on the information and/or credit check obtained by the operator of the wireless communications gateway. In an embodiment, the payment product is jointly issued with the operator of the wireless communications gateway.

The wireless subscriber is given the choice of accepting or declining membership in the portal and/or issuance of the payment product to the subscriber. The users can simply click to accept, and their acceptance is part of the terms and conditions of their use of the system for an embodiment of the present invention. In the embodiment shown, the operator issues each subscriber a credit card number. The credit card number is assigned as the preferred means of payment in the electronic wallet of the subscriber. In an embodiment, to activate the wallet and the payment product, the subscriber must visit the electronic portal 15. In an embodiment, when the mobile telephone user 5 has selected a product (or products) for purchase, and wishes to pay or "check out," the user 5 clicks on (or activates) a wallet icon displayed on the display screen of the user's mobile telephone 10 during the user's visit to the electronic portal 15. The user 5 is then prompted for, and enters, the user's user name and password to validate the user's use of the electronic wallet. In an embodiment, a signal is then sent to the portal 15 by the electronic wallet application advising the portal 15 that a purchase is to be made of the product(s) selected by the user. The wallet 17 then accesses a database to determine the default (or preferred) payment method of the user, which in the embodiment shown comprises the payment product assigned by the operator the portal. The wallet 17 asks the user to confirm the payment means and the purchase by clicking an "Accept" icon. The assigned payment product account number, purchase amount, the shipping address, and other information needed to settle the transaction is sent by the wallet to in the standardized check-out software interface operated by the merchant 20 via the Internet 28. The merchant 20 uses the received information to be paid via the payment and settlement system associated with the payment product. For example, the merchant receives a VISA credit card number and purchase amount from the wallet or portal, the merchant provides the credit card number and purchase amount to the merchant's acquiring bank, the acquiring bank contacts the issuer of the credit card for transaction approval and receives the approval, and the acquiring bank communicates the approval to the merchant. The merchant then ships the product purchased and the acquiring bank uses the settlement system to settle with the financial institution that issued the credit card associated with the received credit card number then uses the Visa to the card issuer, and credits the merchant's account with the purchase price.

In other embodiments, the user 5 may chose to use the payment product assigned by the operator of the portal, or may input data related to another means of payment (e.g., a different credit card) to carry out the transaction. Also, in other embodiments, the financial institution operating the transaction portal 15 may employ a proprietary, or closed, payment system with the merchants, whereby the purchases by the users are settled with the merchants by the financial institution operating the portal.

Both the transaction portal server 14 and the issuer 18 (via the merchant acquiring financial institution) are in communication with the merchant server 20 via the Internet. The merchant server 20 comprises data relating to goods and services offered for purchase by the merchant, and applications for receiving and crediting payment from the issuer as described. In another embodiment, the portal server 14 is in communication with the merchant via a dedicated circuit using Internet protocols.

Various communication between the user and the portal, the portal and the wallet, and the wallet and the merchant is discussed. Embodiments of the present invention employs encryption, such as public key infrastructure encryption (PKI) and/or secure sockets layer (SSL) protocol, for communication that calls for security. For example, the portion of the transaction in which the user confirms and enters his or her PIN number, and in which the wallet transfers credit card information and the user's name and address to the merchant, is encrypted in an embodiment.

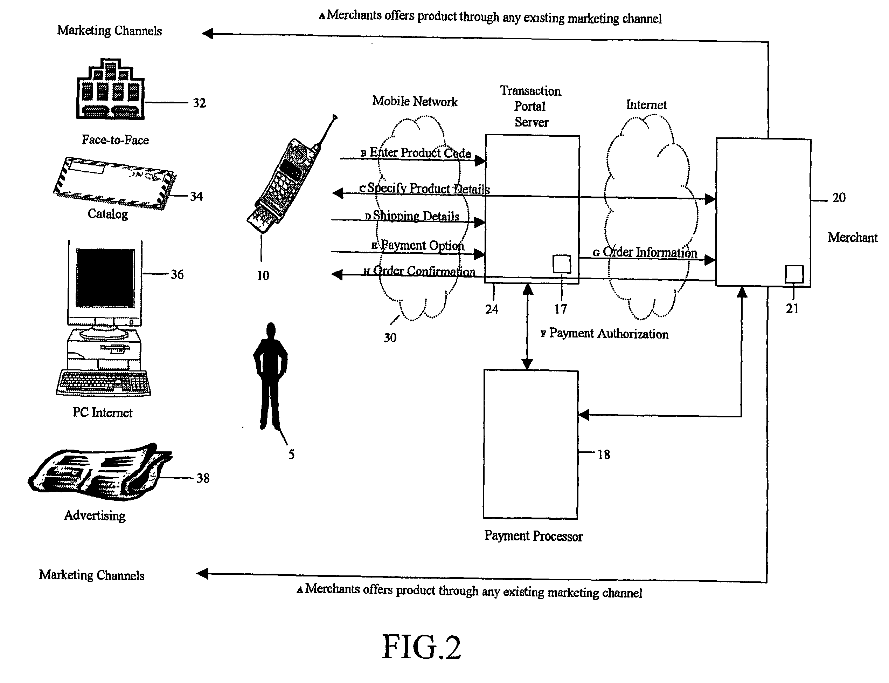

FIG. 2 shows an illustration of the system of FIG. 1 that will be used to describe an initial embodiment of a method according to the present invention. Referring to FIG. 2, the mobile telephone 10 is shown in communication with a transaction portal server 24 via a mobile network 30. The transaction portal server 24 shown comprises the transaction portal server 14 shown in FIG. 1 as well as the electronic wallet server 16 shown in FIG. 1. In other words, the transaction portal server 24 shown in FIG. 2 includes the electronic wallet 17 of the mobile telephone user. The mobile network 30 includes the wireless gateway 12 shown in FIG. 1.

FIG. 2 further shows the transaction portal 24 in communication with the merchant 20 via the Internet 28. The transaction portal 24 is also in communication with the issuer 18, which comprises a payment processor for receiving payment authorization signals and carrying out the settlement of transactions, including providing payment to merchants. The issuer 18 is also in communication with the merchant 20. In the embodiment shown in FIG. 2, the issuer 18 is in communication with the transaction portal server via the Internet, and is in communication with the merchant 20 via settlement network (not shown).

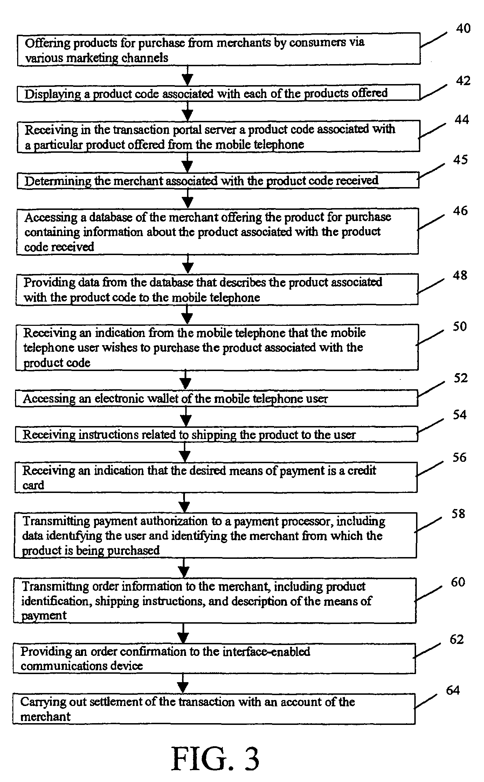

FIG. 3 shows a flow diagram of steps for performing an electronic transaction according to an embodiment of the present invention, as carried out in the system of FIG. 1 and FIG. 2. Referring to FIG. 3, a merchant 20 offers products for purchase from the merchant by consumers via various marketing channels 40, such as face-to-face (e.g., in a retail store or showroom) 32, catalog 34, Internet 36, and advertising 38 (e.g., print advertising, television advertising, and radio advertising). Other marketing channel examples include web pages displayed on a mobile telephone, billboard advertisements, telephone marketing systems (e.g., telemarketing), and handbills (not shown).

In the embodiment shown, a product code is shown (or mentioned) in association with at least some of the products offered for purchase by the merchant 42. For example, a product code may be shown beside a picture of a product in a catalog or on web pages, or a product code may be mentioned by an announcer in a radio advertisement. In the embodiment shown, the product code comprises a unique identifying number for each product (e.g., 47529), but product codes may also comprise short-hand descriptions or brand name of the product (e.g., STAR SHOE, BOOT, or POPCORN), alphanumeric codes (e.g., AZ17), or other identifier.

In an embodiment, the unique product code is based on conventional product code systems that are prevalent in supermarkets and stores that are normally used for bar-coding or otherwise identifying products. An embodiment of the present invention provides additional digits to the front end of a conventional code, for example, in order to identify the specific merchant, so that the portal 17 can route the information to the specific merchant.

A consumer sees a product offered for purchase in one of the marketing channels. A consumer viewing a coat in a retail store will be used as an example. A product code of 11290529 is displayed next to the coat. In the embodiment shown, 112 indicates a particular merchant (the merchant operating the retail store and associated with the merchant server 20) and 90529 indicates a particular product (the coat). The consumer wishes to purchase the coat, but, for one of a number of possible reasons, it is undesirable to purchase the coat from the physical retail store at that time. For example, the consumer may be visiting from out of town, and may wish to purchase the coat, but may not wish to transport the coat. As another example, the retail store may not have the color coat that the consumer wishes to purchase, but the product code for the particular color desired by the consumer is shown.

The consumer activates the consumer's mobile telephone and accesses the transaction portal 15 present in the transaction portal server 24 via the mobile network. The consumer does so by clicking on (or activating) an icon on the display screen of the mobile telephone associated with the portal 15. The consumer views content from the portal 15 on a display screen of the mobile telephone. Content from the portal 15 sent to the mobile telephone 10 via the mobile network 30 prompts the consumer to provide a product code of interest. The consumer provides product code data comprising a product code of 11290529 (the code displayed in conjunction with the coat of interest) in response to the prompt, which is transmitted by the mobile telephone 10 to the transaction portal server 24 via the mobile network 30. The portal 15 receives the product code data provided by the mobile telephone (1129) 44.

After the portal receives the product code 44, the portal determines the merchant associated with the product code received 45. In the embodiment shown, the portal accesses a database in the transaction portal server comprising merchant identifying information correlated with product codes. The database indicates that merchant 20 is associated with product code 1129.

In other embodiments, there may be multiple merchants associated with a particular product code. That is, multiple merchants subscribing to, or associated with, the portal 15 may offer the product indicated by the provided product code. The portal may determine a merchant to associate with the potential product purchase by any one of a variety of methods. For example, the portal 15 may select one of merchants associated with the product at random. As another example, the portal 15 may evenly distribute accesses relating to the product code among the several merchants. As still another example, the portal 15 may employ a particular algorithm having a variety of factors (e.g., fee paid to the portal operator, preference factors, and a number of selections).

Also, in another embodiment, the portal or the merchant web site presents the user of the mobile telephone with a "choice board" for display on the display screen of the mobile telephone. The choice board comprises an interactive, on-line system that allows buyers to design their own products from a menu of attributes, components, prices, and delivery options utilizing the mobile telephone. The user selects the various attributes desired by the user, and the attributes are communicated to the portal.

Referring again to FIG. 3, once the portal determines the merchant associated with the product code received 45 (in the present case, merchant 20), the portal 15 accesses a product data database at a web server of the merchant 20 via the Internet 46. The product data database contains information about the product associated with the 1129 product code, and the portal 15 retrieves such information from the database. Examples of information about the product contained in the database and retrieved by the portal is a short description of the product (e.g., winter coat), a brand name of the product, a size, and a color. In other embodiments, such a database may reside on the transaction portal server 24. In an embodiment, the portal 15 is in communication with the product database and order fulfillment systems of a merchant via the check-out application (software) residing on the merchant server 20.

Once the portal 15 accesses the product data base and retrieves data relating to the product associated with the product code received (11290529) 46, the portal 15 sends the product data to the mobile telephone 48 via the mobile network 30. The mobile telephone 10 receives the product data from the portal 15, and displays the product data on the display screen of the mobile telephone for viewing by the consumer (or user of the mobile telephone). The consumer views the product data displayed - short description of the product, brand name, size, and color. The consumer determines that the product data displayed corresponds to the product that the consumer wishes to purchase, and provides a signal to the portal using the mobile telephone that the consumer wishes to purchase the indicated product. In the embodiment shown, the consumer so indicates by pressing "1" on the consumer's mobile telephone in response to the display of the product data and the prompt of "Press 1 if you wish to purchase this product, Press 2 to provide another product code". The mobile telephone 10 sends the purchase indication to the portal 15 via the mobile network 30.

In another embodiment, the product data comprises the various options available to the consumer for the product associated with the product code received. For example, the product data may comprise the colors in which the coat is available (green, gray, blue), the sizes available (M, L, XL), and the pricing of each option. The consumer views the product data and decides which of the options available that the consumer desires. When the consumer sends the purchase indication to the portal 15, the purchase indication comprises the consumer's indication of which of the options the consumer desires (e.g., gray coat, size XL).

The portal 15 receives the purchase indication from the mobile telephone 10, and accesses an electronic wallet 17 of the mobile telephone user 52. In the embodiment shown, the electronic wallet accessed is located on the transaction portal server, but in alternative embodiments the electronic wallet is located on a different server. In an embodiment, the purchase indication comprises identifying data for the electronic wallet 17 that allows the portal 15 to access the wallet 17 (e.g., IP address, user name, and password).

The electronic wallet 17 comprises payment data related to the user 5 previously entered by the user. For example, the wallet contains a preferred method of payment comprising a credit card type, number, and expiration date for the user 5, and also contains shipping detail data (a shipping address), as well as user-identifying information (e.g., name and e-mail address). The payment data from the wallet is displayed to the user 5 on the mobile telephone display. The user may select the information shown as correct (the shipping address and payment method) or may alter it to provide different shipping detail data and different method of payment selection. For example, if the user of the mobile telephone 10 wishes to change the designated recipient in the shipping detail data from the user's name and address to another person's name and address, the user may do so using the keypad of the mobile telephone 10. Moreover, the wallet may contain multiple, alternative shipping addresses (home, work, relative, pick-up address), and the user may chose from one of those addresses. In addition, the wallet may contain previously-entered information related to various payment options (e.g., various credit card numbers and related information, and various debit card numbers and related information). The user may chose from any one of the shown options, or enter a new method of payment.

In the embodiment shown, the user 5 elects to use the payment data from the wallet displayed, including the preferred method of payment, the credit card account issued by the issuer when the subscriber joined the portal service. The shipping detail data and payment option data comprising data reflecting desired means of payment is sent from the mobile telephone 10 to the portal 15 via the mobile network 30.

In an embodiment, the shipping detail data may comprise "Immediate Pick-Up." For example, the user in a retail store may wish to provide the product information via the user's mobile telephone as above, continue shopping for a short while, and then pick the coat up at the front desk to carry with the user.

The portal 15 receives the shipping detail data and payment option data reflecting the desired means of payment (credit card) from the mobile telephone 54, 56. The portal 15 then transmits payment authorization to a payment processor 58. In the embodiment shown, the payment processor 18 is the issuer of the credit card reflected in the payment option data. The payment authorization transmitted to the payment processor 18 includes data identifying the user (e.g., the name from the electronic wallet), data identifying the merchant from which the product is being purchased, and data relating to the product purchased (e.g., a purchase price and an identifier). The payment processor 18 receives the data and provides authorization to the portal 15. The payment processor 18 then arranges for payment to be delivered to an account of the indicated merchant for the purchase price indicated via a settlement network.

The portal 15 also transmits order information to the merchant 20. In the embodiment shown, the order information is sent to the check-out application (software) residing on the merchant's web site. In the embodiment shown, the portal 15 causes the wallet 17 to automatically complete the fields in the merchant's order fulfillment database. Order information includes purchaser identification (e.g., name, address, e-mail address), product identification (e.g., product code), shipping instructions (e.g., shipping address), the authorization from the issuer, and payment option data comprising description of the means of payment (e.g., credit card number, type, and expiration date) 60. The payment option data sent to the check-out application comprises information from the electronic wallet of the mobile telephone user 5. The merchant 20 receives the data, and arranges to fulfill the order per the shipping instructions. In an embodiment, the electronic wallet of the user residing on the portal transmits the order information to the merchant 20.

The merchant 20 provides an order confirmation to the purchaser 62. In the embodiment shown, the merchant provides a confirmation page showing a order identification number to the portal 15, which provides the page to the mobile telephone 10. In other embodiments, the merchant 20 uses the e-mail address of the purchaser as received to provide a confirming e-mail.

The confirmation provided by the merchant may be provided by other means. For example, the confirmation may be provided by a pre-recorded voice telephone call or by sending a confirming web page to the purchaser. The various confirmations discussed herein may be provided by e-mail or these other means, as well.

As mentioned, the payment processor 18 initiates a settlement of the transaction with an account of the merchant 64 using a settlement network. In this way, the merchant 20 receives payment from the user for the ordered product.

Numerous products may be purchases using the method and system for an embodiment of the present invention. Examples include train tickets, airline tickets, books, music, lawn services, and other products.

In the embodiment shown, the operator of the wireless gateway 12 and the operator of the portal 15 have entered into a joint venture in relation to the portal. The operator of the portal 15 is also the operator of the electronic wallet application 17. The operator of the wireless gateway comprises a mobile telephone network operator and the operator of the portal 15 and the electronic wallet 17 comprises a bank. In the embodiment shown, the bank provides the credit and financial services related to the joint venture, including the check-out software made available to the merchants, as well as providing the portal, and the mobile telephone network operator provides the merchant relationships and a customer base. The mobile telephone network operator also contributes its knowledge of the name and addresses of its subscribers, as well as their credit ratings.

The portal 15 serves as a Internet portal to Internet content providers that users of mobile telephones associated with the gateway 12 (i.e., subscribers) may access with the browsing function of their telephones. The portal 15 comprises hyperlinks to the web sites of such content providers and includes hyperlinks to pages within the portal 15 that includes content from at least some of the content providers. Examples of content includes information, news, offers for the purchase of goods and services, advertising, pictures, graphics, video communication, and other e-commerce offers. The content providers have contracted with the operator of the electronic gateway to provide content and to provide a commission payment to the operator of the electronic gateway when the operator's subscribers access the content and/or pay for services offered by the content provider. Moreover, the content providers have contracted with the operator of the electronic gateway to bill the subscribers for services of the content providers accessed by the subscribers. The operator of the electronic gateway provides such billing to its subscribers via its billing for mobile telephone service.

In one such joint-venture embodiment, the users of (or subscribers to) the wireless service offered by the operator of the wireless gateway 12 are invited to become members of the portal (i.e., invited to use the portal and, in the embodiment shown, to receive a user name and password that allows access to the portal). When the operators of the gateway and the portal enter into the joint venture, the current subscribers of the gateway are invited to become members of the portal, and subscribers joining the gateway service at a later date are invited upon subscribing. Use of the portal 15 is offered as an additional feature to the services provided to the subscriber on subscribing to the service offered by the operator of the communications gateway 12.

In one such joint-venture embodiment, the transactions that may be carried out at the content providers using the portal 15 system are limited to transactions involving a maximum amount (e.g., three dollars) in order to limit the transactions to micro-payments. In addition, in an embodiment, the bank provides payment to the mobile telephone network operator in the form of a portion of the bank's issuer's interchange fee.

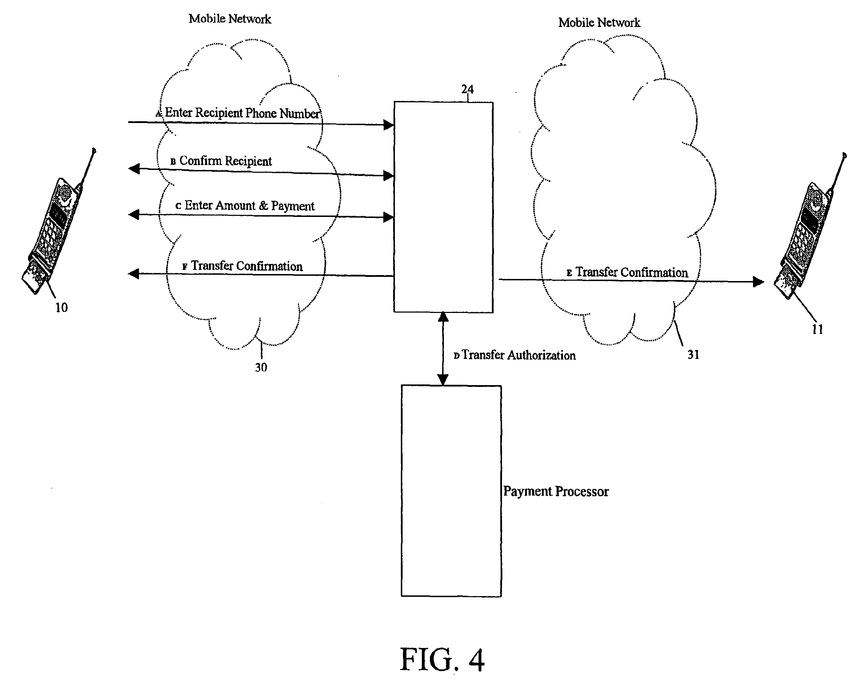

The system can also facilitate person-to-person payments, i.e., facilitates one individual providing money to a second individual electronically and without passing physical cash or check. FIG. 4 shows such a system. The system shown in FIG. 4 has several common elements with the system shown in FIG. 2. Referring to FIG. 4, a first interface-enabled communications device comprising a first mobile telephone 10 is shown in communication with the transaction portal server 24 via the mobile network 30. Like the system in FIG. 2, the transaction portal server 24 is in communication with the payment processor 18 via the Internet.

In the system shown in FIG. 4, the transaction portal server 24 is in communication with a second electronic communications device 11, a second mobile telephone labeled "Recipient." In the embodiment shown, the first communications device 10 is located in the United States and the second communications device 11 is located in Japan. The transaction portal server 24 and the second mobile telephone 11 are in communication via a mobile network 31, which, in the embodiment shown, is the same network 30 that connects the first mobile telephone 10 and the transaction portal server 24. In other embodiments, the two mobile networks 30, 31 are separate networks.

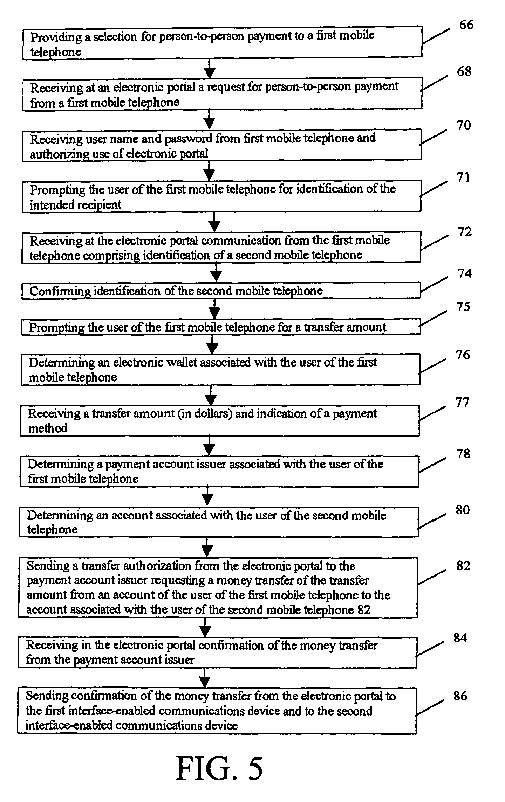

FIG. 5 shows a flow diagram of steps for performing an electronic transaction, as carried out in the system of FIG. 4. In the example shown, both the user of the first and second mobile telephones 10, 11 shown in FIG. 4 are registered with the transaction portal 15. That is, the transaction portal 15 has previously received and stored their names, addresses, mobile telephone numbers, further identifiers (e.g., user names and passwords), and bank account numbers.

Referring to FIG. 4, the user of the first mobile telephone 10 wishes to provide a payment to the user of the second mobile telephone 11. The user of the first mobile telephone asks the user of the second mobile telephone for that user's telephone number, which the user of the second mobile telephone provides. The user of the first mobile telephone also asks the user of the second mobile telephone for a further identifier, namely that user's user name for the electronic transaction portal, which the user of the second mobile telephone provides. The user of the first mobile telephone, an interface-enabled mobile telephone, uses the telephone to access the electronic transfer portal 15 via the mobile network 30.

Referring to FIG. 5 (and FIG. 4), the electronic transfer portal 15 provides web content to the first mobile telephone 10 displaying a service selection choice to the user 68. The service selection choice is displayed on the display screen of the first mobile telephone, and includes a selection for person-to-person payment. In the example shown, the service selection is displayed in the form of "If you would like to undertake a person-to-person payment, press 1."

The user of the first mobile telephone 10 indicates a request for person-to-person payment by pressing "1," which is transmitted to the electronic transfer portal 15 via the mobile network 30. The electronic transfer portal 15 receives the request for person-to-person payment from the first mobile telephone 70. The portal 15 then prompts the user of the first mobile telephone for the user's user name and password associated with the portal 15. The portal 15 compares the user name and password provided with a database of valid user names and passwords, and authorizes use of electronic portal upon determining that the provided user name and password are valid 66.

The portal 15 then prompts the user of the first mobile telephone for identification of the recipient of the requested payment 71. The portal 15 does so by transmitting to the first mobile telephone a page requesting the telephone number of the recipient and the user name of the recipient. The user 5 types in the requested information into the first mobile telephone, and transmits the information to the portal 15 via the mobile network 30.

The portal 15 receives from the first mobile telephone the data comprising identification of a second mobile telephone in the form of the telephone number for the second mobile telephone 72. The portal also receives the user name provided as confirmation of the user of the second mobile telephone as the recipient of the requested payment. The portal 15 compares the telephone number and user name provided by the user of the first mobile telephone with a database of registered users of the portal 15. The portal 15 determines that the user name is the user name associated with the telephone number provided, and thereby confirms the identification of the second mobile telephone as that of the intended recipient 74. This confirmation is sent to the first mobile telephone via the mobile network 30. Note that it is not necessary for the recipient to have his or her wireless telephone switched on to receive payment.

The portal 15 then determines an electronic wallet associated with the user of the first mobile telephone 75. The portal 15 does so by accessing a database in the portal 15 that identifies the wallet associated with the user. In the example shown, the user's wallet resides on the electronic transfer server 24. The portal 15 accesses the electronic wallet associated with the user of the first mobile telephone and determines the preferred payment method of the user. In the example shown, the method comprises using a credit card, and the credit card type, number, and expiration date are provided in the wallet, as accessed by the portal 15.

In the example shown, the electronic wallet 15 associated with the payer stores information collected by the operator of the electronic communications gateway 12 when a mobile phone is sold to a customer. The application seeks information that the customer wishes to store in the customer's electronic wallet. The customer may add to or edit the electronic wallet information at any time via the customer's mobile telephone or via the Internet.

The portal 15 reminds the user of the preferred payment method from the wallet by so indicating on a page provided to the first mobile telephone. Other types of payment methods, e.g., a debit account, may also be used. The user of the first mobile telephone indicates to the portal 15 that the user wishes to use the preferred payment method from the wallet (the credit card account).

The portal 15 then prompts the user of the first mobile telephone for a transfer (or payment) amount (in dollars) and an indication of payment method 76. In the embodiment shown, the portal 15 does so by transmitting a page for display on the first mobile telephone's display screen requesting that the user type in a transfer amount and press a number indicative of the method of payment. The first number indicates the method indicated in the electronic wallet. The user of the first mobile telephone types in US$125.00 into the transfer amount field and presses "1" to indicate that the user wishes to use the payment method (credit card) indicated in the electronic wallet, which is transmitted to the portal 15 via the mobile network 30.

The portal 15 receives the transfer amount and indication of a payment method 77. The portal 15 then determines a payment account issuer associated with the payment method selected and the user of the first mobile telephone (i.e., the credit card issuer) 78. The portal 15 does so by examining the credit card number.

The portal 15 next determines an account associated with the designated recipient of the payment, i.e., the user of the second mobile telephone 80. The portal does so by accessing a database on the electronic transfer server containing the account number for the payment receipt account designated by the recipient. Such an account number was provided by the user of the second mobile telephone when signing up for the service provided by the operator of the electronic transaction portal, or when signing up for the service provided by the operator of the electronic communications gateway, and then provided to the operator of the portal. In the example shown, the account associated with the designated recipient is a bank checking account, and is with a different financial institution that the credit card account used by the sender 10. It is also possible that account of the payer and the account of the payee are with the same financial institution.

Once the portal 15 determines the payment account issuer and the deposit account of the recipient, the portal 15 determines the exchange rate between the currencies used in the location of the first mobile telephone 10 and the second mobile telephone, and determines the equivalent of the transfer amount entered by the user of the first mobile telephone in the currency used by the user of the second mobile telephone. In the example discussed, the portal 15 converts US$125.00 to the Yen equivalent based on the current exchange rate. In the examples, the exchange rate and calculation of the transfer amount equivalent of currency is based on the geographic location of the account associated the second interface-enabled communications device 11.

The portal 15 then sends a transfer authorization to the payment account issuer 82. The transfer authorization requests a transfer of the transfer amount from the payment account of the user of the first mobile telephone to the deposit account of the user of the second mobile telephone (the recipient). The transfer authorization request includes the needed data regarding both the payer (the user of the first mobile telephone) and payee (the user of the second mobile telephone), including the credit card type, number, and expiration date of the payee's credit card, and the account number of the payee's deposit account. The issuer causes the transfer amount (US$125) in equivalent currency to be debited in the payer's credit card account and to be credited to the payee's deposit account via a settlement network.

Next, the electronic portal 15 receives confirmation of the money transfer from the payment account issuer 84. The portal 15 sends confirmation of the money transfer to the first mobile telephone and to the second mobile telephone 86. Confirmation to the user of the second mobile telephone may be made in any number of ways. In the example shown, the user of the second mobile telephone has logged into the portal 15, and the portal 15 sends a page for display on the display screen of the second mobile telephone showing confirmation of the transaction. In other examples, the confirmation is sent to the second mobile telephone in the form of an automatic-voice telephone call made to the second mobile telephone confirming the transfer, by an e-mail to the user of the second mobile telephone, or by other means. In an example employing e-mail confirmation, the recipient mobile telephone 11 may be set to provide a audio alert when such e-mail arrives for the recipient.

It is also possible that a plurality of mobile networks reach an agreement whereby such person-to-person payment services and electronic mall services are offered across a variety of networks, rather than over only one network.

Various embodiments of the invention have been described in fulfillment of the various objects of the invention. It should be recognized that these embodiments are merely illustrative of the principles of the present invention.

## Claims

1. A method of operating a computer system for data management of an electronic transaction comprising:
receiving selection data identifying a product offered for purchase from a merchant (21) in a transaction portal server (14) coupled to a merchant server (20) provided with a merchant check-out application that is in communication with a product database and an order fulfillment system at the merchant server (20) from an interface-enabled communications device (10) via a wireless communication network (30) coupled to the transaction portal server (14);
providing product information data comprising information describing at least one aspect of the product to the interface-enabled communications device (10) from the product database of the at the merchant server (20) via the wireless communication network (30) coupled to the transaction portal server (14);
receiving shipping detail data comprising instructions related to shipping the product to a designated recipient by the merchant check-out application of the merchant server (20) via the transaction portal server (14) from an electronic wallet server (16) associated with the transaction portal server (14) and coupled to a payment processor (18);
receiving payment option data comprising information describing a desired means of payment for the product by the merchant check-out application of the merchant server (20) from the interface-enabled communications device (10) via the wireless communication network (30) coupled to the transaction portal server (14);
transmitting payment authorization data to a the payment processor (18) by the transaction portal server (14), wherein the payment authorization data comprises purchaser identifying data and merchant identifying data identifying the merchant;
the payment processor (18) providing authorization to the electronic transaction portal (15) of the transaction portal server (14); and
transmitting order information to the order fulfillment system at the merchant server (20) via the merchant check-out application of the merchant server (20) by the transaction portal server (14), wherein the order information comprises payment option data and shipping detail data.

2. The method of claim 1 further comprising displaying a product code associated with the product.

3. The method of claim 2 wherein the selection data comprises the product code associated with the product.

4. The method of claim 3 further comprising receiving customer identification information.

5. The method of claim 4 further comprising determining an electronic wallet application (17) on the electronic wallet server (16) associated with the customer identification information.

6. The method of claim 5 wherein receiving shipping detail data comprising instructions related to shipping the product to the designated recipient comprises accessing the electronic wallet application (17) associated with the customer identification information on the electronic wallet server (16).

7. The method of claim 6 wherein receiving payment option data comprising information describing the desired means of payment for the product comprises accessing the electronic wallet application (17) associated with the customer identification information on the electronic wallet server (16).

8. The method of claim 7 wherein the product information comprises the price of the product.

9. The method of claim 7 wherein the product information comprises at least one of the following: price of the product, description of attributes of the product, brand name of the product, and name of the product.

10. The method of claim 9 further comprising providing an order confirmation to the interface-enabled communications device (10).

11. The method of claim 10 wherein receiving customer identification information comprises receiving customer identification information from the interface-enabled communications device (10).

12. The method of claim 11 wherein the interface-enabled communications device (10) comprises a web browser.

13. The method of claim 12 wherein the interface-enabled communications device (10) comprises a wireless telephone.

14. The method of claim 12 wherein the interface-enabled communications device (10) comprises at least one of the following: a telephone, a personal computer, and a personal digital assistant.

15. The method of claim 14 wherein the product code comprises a unique number assigned to the product.

16. The method of claim 15 further comprising transmitting the product code data to the merchant server (20), wherein the merchant server (20) is associated with the product code.

17. The method of claim 16 wherein the shipping detail data comprises a shipping address.

18. The method of claim 17 wherein payment option data identifies the electronic wallet application (17).

19. The method of claim 18 wherein the selection data comprises merchant identifying data identifying the merchant.

20. The method of claim 19 wherein the customer identification comprises a telephone number.

21. The method of claim 19 wherein the transaction portal server (14) is in communication with at least two merchant servers.

22. The method of claim 20 wherein the desired means of payment for the product comprises a credit card.

23. The method of claim 20 wherein offering a product for purchase from a merchant comprises providing a hyperlink on the transaction portal server (14) to a merchant server (20).

24. A computer system for data management of an electronic transaction comprising:
a transaction portal server (14) coupled to a merchant server (20) provided with a merchant check-out application that is in communication with a product database and an order fulfillment system at the merchant server 20 wherein the transaction portal server (14) is adapted for receiving selection data identifying a product offered for purchase from a merchant (21) in the transaction portal server (14) from an interface-enabled communications device (10) via a wireless communication network (30) coupled to the transaction portal server (14);
wherein the merchant server (20) is adapted for providing product information data comprising information describing at least one aspect of the product to the interface-enabled communications device (10) from the product database at the merchant server (20) via the wireless communication network (30) coupled to the transaction portal server (14);
wherein the merchant check-out application of the merchant server (20) is adapted for receiving shipping detail data comprising instructions related to shipping the product to a designated recipient via the transaction portal server (14) from an electronic wallet server (16) associated with the transaction portal server (14) and coupled to a payment processor (18);
wherein the merchant check-out application of the merchant server (20) is adapted for receiving payment option data comprising information describing a desired means of payment for the product from the interface-enabled communications device (10) via the wireless communication network (30) coupled to the transaction portal server (14);
wherein the transaction portal server (14) is further adapted for transmitting payment authorization to a payment processor (18), wherein the payment authorization comprises purchaser identifying data and merchant identifying data identifying the merchant;
wherein the payment processor (18) is adapted for providing authorization to the electronic transaction portal (15) of the transaction portal server (14); and
wherein the transaction portal server (14) is further adapted for transmitting order information to the order fulfillment system at the merchant server (20) via the merchant check-out application of the merchant server (20), wherein the order information comprises payment option data and shipping detail data.

25. The method of claim 24 further comprising entering into a joint venture between a provider of the transaction portal server (14) and a provider of the wireless communications network (30).

26. The method of claim 25 further comprising providing the transaction portal server (14) in communication with the wireless communications network (30).

27. The method of claim 26 further comprising providing the subscriber access to the transaction portal server (14).

28. The method of claim 27 further comprising receiving by the operator of the wireless communications network (30) billing data reflecting a transaction between the merchant and the subscriber and providing a bill to the subscriber comprising the billing data.

29. The method of claim 28 wherein the bill further comprises billing for communications services.

30. The method of claim 29 wherein communications services comprises mobile telephone service.

31. The method of claim 30 wherein the provider of the wireless communications network (30) comprises a mobile telephone network operator.

32. The method of claim 31 wherein the provider of the transaction portal server (14) comprises a bank.

33. The method of claim 24 further comprising determining a currency exchange rate and calculating the transfer amount equivalent of currency used in the geographic location of the account associated the second interface-enabled communications device.

## Patentansprüche

1. Verfahren zum Betreiben eines Computersystems zur Datenverwaltung einer elektronischen Transaktion umfassend:
Empfangen von Auswahldaten, welche ein Produkt identifizieren, das von einem Händler (21) zum Einkauf angeboten wird, und zwar in einen Transaktions-Portal-Server (14), der an einen Händlerserver (20) gekoppelt ist, der mit einer Händler-Überprüfungsanwendung versehen ist, welche in Kommunikation mit einer Produkt-Datenbank und einem Auftragsausführungssystem bei dem Händlerserver (20) steht, und zwar von einer Schnittstellen-aktiven Kommunikationsvorrichtung (10) über ein kabelloses Kommunikationsnetzwerk (30), welches an den Transaktions-Portal-Server (14) gekoppelt ist;
Liefern von Produktinformationsdaten, umfassend Informationen, welche mindestens einen Aspekt des Produktes beschreiben, an die Schnittstellen-aktive Kommunikationsvorrichtung (10), von der Produktdatenbank an dem Händlerserver (20), über das kabellose Kommunikationsnetzwerk (30), welches an den Transaktions-Portal-Server (14) gekoppelt ist;
Empfangen von Transport-Detaildaten, umfassend Anweisungen, in Bezug auf den Transport des Produktes zu einem bestimmten Empfänger, durch die Händler-Überprüfungsanwendung des Händlerservers (20), über den Transaktions-Portal-Server (14), von einem elektronischen Geldbörse-Server (16), der mit dem Transaktions-Portal-Server (14)verbunden ist und gekoppelt an einen Zahlungsprozessor (18);
Empfangen von Zahlungs-Optionsdaten, umfassend Informationen, welche ein gewünschtes Mittel der Zahlung für das Produkt beschreiben, durch die Händler-Überprüfungsanwendung des Händlerservers (20), von der Schnittstellen-aktiven Kommunikationsvorrichtung (10), über das kabellose Kommunikationsnetzwerk (30), welches an den Transaktions-Portal-Server (14) gekoppelt ist;
Übertragen von Zahlungsautorisierungsdaten an den Zahlungsprozessor (18), durch den Transaktions-Portal-Server (14), wobei die Zahlungsautorisierungsdaten umfassen, Einkäuferidentifizierungsdaten und Händleridentifizierungsdaten, welche den Händler identifizieren;
Liefern einer Autorisierung durch den Zahlungsprozessor (18), an das elektronische Transaktions-Portal (15) des Transaktions-Portal-Servers (14); und Übertragen von Auftragsinformationen an das Auftragausführungssystem, bei dem Händlerserver (20), über die Händler-Überprüfungsanwendung des Händlerservers (20), durch den Transaktions-Portal-Server (14), wobei die Auftragsinformationen, Zahlungs-Optionsdaten und Transport-Detaildaten umfassen.

2. Verfahren gemäß Anspruch 1, weiter umfassend, Anzeigen eines Produktcodes, welcher dem Produkt zugeordnet ist.

3. Verfahren gemäß Anspruch 2, wobei die Auswahldaten den Produktcode, welcher dem Produkt zugeordnet ist, umfassen.

4. Verfahren gemäß Anspruch 3, weiter umfassend, Empfangen von Informationen der Kundenidentifikation.

5. Verfahren gemäß Anspruch 4, weiter umfassend, Bestimmen einer elektronischen Geldbörsenanwendung (17), auf dem elektronischen Geldbörsenserver (16), im Zusammenhang mit Informationen der Kundenidentifikation.

6. Verfahren gemäß Anspruch 5, wobei das Empfangen von Transport-Detaildaten aufweisend Anweisungen, die sich auf das Transportieren des Produktes zu dem bestimmten Empfänger beziehen, das Zugreifen auf die elektronische Geldbörsenanwendung (17) umfasst, welche den Informationen der Kundenidentifikation, auf dem elektronischen Geldbörsensurfer (16) zugeordnet ist.

7. Verfahren gemäß Anspruch 6, wobei das Empfangen von Zahlungs-Optionsdaten Informationen umfasst, welche die gewünschten Mittel der Zahlung für das Produkt beschreiben, umfassend den Zugriff auf die elektronische Geldbörsenanwendung (17), welche den Informationen der Kundenidentifikation, auf dem elektronischen Geldbörsenserver (16) zugeordnet ist.

8. Verfahren gemäß Anspruch 7, wobei die Produktinformation den Preis des Produktes umfasst.

9. Verfahren gemäß Anspruch 7, wobei die Produktinformation mindestens einen der folgenden Punkte aufweist: Preis des Produktes, Beschreibung der Eigenschaften des Produktes, Markenname des Produktes und Name des Produktes.

10. Verfahren gemäß Anspruch 9, weiter umfassend, Liefern einer Auftragsbestätigung an die Schnittstellen-aktive Kommunikationsvorrichtung (10).

11. Verfahren gemäß Anspruch 10, wobei das Empfangen von Informationen der Kundenidentifikation umfasst, das Empfangen von Informationen der Kundenidentifikation, von der schnittstellen-aktiven Kommunikationsvorrichtung (10).

12. Verfahren gemäß Anspruch 11, wobei die schnittstellen-aktive Kommunikationsvorrichtung (10) einen Webbrowser umfasst.

13. Verfahren gemäß Anspruch 12, wobei die schnittstellen-aktive Kommunikationsvorrichtung (10) ein kabelloses Telefon umfasst.

14. Verfahren gemäß Anspruch 12, wobei die schnittstellen-aktive Kommunikationsvorrichtung (10) mindestens einen der folgenden Punkte aufweist: ein Telefon, einen Personal-Computer und einen Minicomputer (PDA - personal digital assistant).

15. Verfahren gemäß Anspruch 14, wobei der Produktcode eine bestimmte Nummer umfasst, welche dem Produkt zugeordnet ist.

16. Verfahren gemäß Anspruch 15, weiter umfassend, Übertragen der Produktcodedaten zu dem Händlerserver (20), wobei der Händlerserver (20) im Zusammenhang mit dem Produktcode steht.

17. Verfahren gemäß Anspruch 16, wobei die Transport-Detaildaten eine Lieferadresse umfassen.

18. Verfahren gemäß Anspruch 17, wobei Zahlungs-Optionsdaten die elektronische Geldbörsenanwendung (17) identifizieren.

19. Verfahren gemäß Anspruch 18, wobei die Auswahldaten, Identifizierungsdaten zum Identifizieren des Händlers umfassen.

20. Verfahren gemäß Anspruch 19, wobei die Kundenidentifikation eine Telefonnummer umfasst.

21. Verfahren gemäß Anspruch 19, wobei der Transaktions-Portal-Server (14), in Kommunikation mit mindestens zwei Händlerservern steht.

22. Verfahren gemäß Anspruch 20, wobei die gewünschten Mittel der Zahlung für das Produkt eine Kreditkarte umfassen.

23. Verfahren gemäß Anspruch 20, wobei das Anbieten eines Produktes zum Einkauf von einem Händler, das Liefern eines Hyperlinks auf dem Transaktions-Portal-Server (14) zu einem Händlerserver (20) umfasst.

24. Computersystem zur Datenverwaltung einer elektronischen Transaktion, umfassend:
einen Transaktions-Portal-Server (14), welcher an einen Händlerserver (20) gekoppelt ist, ausgerüstet mit einer Händler-Überprüfungsanwendung, welche in Kommunikation mit einer Produkt-Datenbank und einem Auftragsausführungssystem bei dem Händlerserver (20) steht, wobei der Transaktions-Portal-Server (14) angepasst ist, um Auswahldaten zu empfangen, welche ein Produkt identifizieren, welches von einem Händler (21), in dem Transaktions-Portal-Server (14) zum Einkauf angeboten wird, von einer schnittstellen-aktiven Kommunikationsvorrichtung (10), über ein kabelloses Kommunikationsnetzwerk (30), welches an den Transaktions-Portal-Server (14) gekoppelt ist; wobei der Händlerserver (20) angepasst ist, Produktinformationsdaten, umfassend Informationen, welche mindestens einen Aspekt des Produktes beschreiben, an die schnittstellen-aktive Kommunikationsvorrichtung (10), von der Produktdatenbank auf dem Händlerserver (20), über das kabellose Kommunikationsnetzwerk (30) zu liefern, welches an den Transaktions-Portal-Server (14) gekoppelt ist; wobei die Händler-Überprüfungsanwendung des Händlerservers (20) angepasst ist, um Transport-Detaildaten zu empfangen, umfassend Anweisungen in Bezug auf den Transport des Produktes zu einem bestimmten Empfänger, über den Transaktions-Portal-Server (14), von einer elektronischen Geldbörse (16), im Zusammenhang mit dem Transaktions-Portal-Server (14) und gekoppelt an einen Zahlungsprozessor (18); wobei die Händler-Überprüfungsanwendung des Händlerservers (20) angepasst ist, Zahlungs-Optionsdaten zu empfangen, umfassend Informationen, welche ein gewünschtes Mittel der Zahlung für das Produkt, von der schnittstellen-aktiven Kommunikationsvorrichtung (10), über das kabellose Kommunikationsnetzwerk (30), welches an den Transaktions-Portal-Server (14) gekoppelt ist, beschreiben; wobei der Transaktions-Portal-Server (14) weiter angepasst ist, eine Zahlungsautorisierung zu dem Zahlungsprozessor (18) zu übertragen, wobei die Zahlungsautorisierung, Einkäuferidentifizierungsdaten und Händleridentifizierungsdaten, welche den Händler identifizieren, umfasst; wobei der Zahlungsprozessor (18) angepasst ist, dem elektronischen Transaktions-Portal (15) des Transaktions-Portal-Servers (14), eine Autorisierung zu liefern und
wobei der Transaktions-Portal-Server (14) weiter angepasst ist, Auftragsinformationen zu dem Auftragsausfiihrungssystem, bei dem Händlerserver (20), über die Händler-Überprüfungsanwendung des Händlerservers (20) zu übertragen, wobei die Auftragsinformation, Zahlungs-Optionsdaten und Transport-Detaildaten umfasst.

25. Verfahren gemäß Anspruch 24, weiter umfasst das Eintreten in ein Gemeinschaftsunternehmen zwischen einem Anbieter des Transaktions-Portal-Servers (14) und einem Anbieter des kabellosen Kommunikationsnetzwerkes (30).

26. Verfahren gemäß Anspruch 25, weiter umfassend Liefern des Transaktions-Portal-Servers (14), in Kommunikation mit dem kabellosen Kommunikationsnetzwerk (30).

27. Verfahren gemäß Anspruch 26, weiter umfassend, Liefern des Zugriffs auf den Transaktions-Portal-Server (14), an den Teilnehmer.

28. Verfahren gemäß Anspruch 27, weiter umfassend, Empfangen von Rechnungsdaten, welche eine Transaktion zwischen dem Händler und dem Teilnehmer wiedergeben, durch den Anwender des kabellosen Kommunikationsnetzwerkes (30) und Liefern einer Rechnung zu dem Teilnehmer, umfassend das Rechnungsdatum.

29. Verfahren gemäß Anspruch 28, wobei die Rechnung weiter die Abrechnung für Kommunikationsdienstleistungen umfasst.

30. Verfahren gemäß Anspruch 29, wobei die Kommunikationsdienstleistungen eine Mobiltelefondienstleistung umfassen.

31. Verfahren gemäß Anspruch 30, wobei der Anbieter des kabellosen Kommunikationsnetzwerkes (30), einen Mobiltelefonnetzwerk-Betreiber umfasst.

32. Verfahren gemäß Anspruch 31, wobei der Anbieter des Transaktions-Portal-Servers (14) eine Bank umfasst.

33. Verfahren gemäß Anspruch 24, weiter umfassend, Bestimmen eines Währungskurses und Berechnen des Überweisungsbetrags-Äquivalentes, das in der Währung des Kontos des jeweiligen Landes benutzt wird, welches der zweiten schnittstellen-aktiven Kommunikationsvorrichtung zugehörig ist.

## Revendications

1. Une méthode pour faire fonctionner un système informatique pour la gestion de données d'une transaction électronique comprenant :
la réception de données de sélection identifiant un produit mis en vente par un vendeur (21) sur un serveur de portail de transaction (14) couplé à un serveur commercial (20) fourni avec une application de caisse qui communique avec une base de données de produits et un système d'exécution de commandes se trouvant sur le serveur commercial (20) à partir d'un dispositif de communication à interface active (10) via un réseau de communication sans fil (30) couplé au serveur de portail de transaction (14) ;
la fourniture de données d'informations produit comprenant des informations décrivant au moins un aspect du produit au dispositif de communication à interface active (10) à partir de la base de données de produits se trouvant sur le serveur commercial (20) via le réseau de communication sans fil (30) couplé au serveur de portail de transaction (14);
la réception de données de détails d'expédition comprenant des instructions relatives à l'expédition du produit à un destinataire désigné par l'application de caisse du serveur commercial (20) via le serveur de portail de transaction (14) à partir d'un serveur de portefeuille électronique (16) associé au serveur de portail de transaction (14) et couplé à un processeur de paiement (18) ;
la réception de données d'option de paiement comprenant des informations décrivant un moyen de paiement souhaité pour le produit par l'application de caisse du serveur commercial (20) à partir du dispositif de communication à interface active (10) via le réseau de communication sans fil (30) couplé au serveur de portail de transaction (14) ;
la transmission de données d'autorisation de paiement au processeur de paiement (18) par le serveur de portail de transaction (14), dans lequel les données d'autorisation de paiement comprennent des données d'identification de l'acheteur et des données d'identification du vendeur identifiant le vendeur ;
le processeur de paiement (18) fournissant une autorisation au portail de transaction électronique (15) du serveur de portail de transaction (14) ; et
la transmission d'informations de commande au système d'exécution de commandes se trouvant sur le serveur commercial (20) via l'application de caisse du serveur commercial (20) par le serveur de portail de transaction (14), dans lequel les informations de commande comprennent des données d'option de paiement et des données de détails d'expédition.

2. La méthode de la revendication 1 comprenant en outre l'affichage d'un code produit associé au produit.

3. La méthode de la revendication 2 dans laquelle les données de sélection comprennent le code produit associé au produit.

4. La méthode de la revendication 3 comprenant en outre la réception d'informations d'identification client.

5. La méthode de la revendication 4 comprenant en outre la détermination d'une application de portefeuille électronique (17) sur le serveur de portefeuille électronique (16) associée aux informations d'identification du client.

6. La méthode de la revendication 5 dans laquelle la réception de données de détails d'expédition comprenant des instructions relatives à l'expédition du produit au destinataire désigné comprend un accès à l'application de portefeuille électronique (17) associée aux informations d'identification du client sur le serveur de portefeuille électronique (16).

7. La méthode de la revendication 6 dans laquelle la réception de données d'option de paiement comprenant des informations décrivant le moyen de paiement souhaité pour le produit comprend l'accès à l'application de portefeuille électronique (17) associée aux informations d'identification du client sur le serveur de portefeuille électronique (16).

8. La méthode de la revendication 7 dans laquelle les informations produit comprennent le prix du produit.

9. La méthode de la revendication 7 dans laquelle les informations produit comprennent au moins un des éléments suivants : prix du produit, description des attributs du produit, nom de marque du produit et nom du produit.

10. La méthode de la revendication 9 comprenant en outre la fourniture d'une confirmation de commande au dispositif de communication à interface active (10).

11. La méthode de la revendication 10 dans laquelle la réception d'informations d'identification du client comprend la réception d'informations d'identification du client du dispositif de communication à interface active (10).

12. La méthode de la revendication 11 dans laquelle le dispositif de communication à interface active (10) comprend un navigateur web.

13. La méthode de la revendication 12 dans laquelle le dispositif de communication à interface active (10) comprend un téléphone sans fil.

14. La méthode de la revendication 12 dans laquelle le dispositif de communication à interface active (10) comprend au moins un des éléments suivants : un téléphone, un ordinateur personnel et un assistant numérique personnel.

15. La méthode de la revendication 14 dans laquelle le code produit comprend un numéro unique attribué au produit.

16. La méthode de la revendication 15 comprenant en outre la transmission des données de code produit au serveur commercial (20), dans laquelle le serveur commercial (20) est associé au code produit.

17. La méthode de la revendication 16 dans laquelle les données de détails d'expédition comprennent une adresse d'expédition.

18. La méthode de la revendication 17 dans laquelle des données d'option de paiement identifient l'application de portefeuille électronique (17).

19. La méthode de la revendication 18 dans laquelle les données de sélection comprennent des données d'identification du vendeur identifiant le vendeur.

20. La méthode de la revendication 19 dans laquelle l'identification du client comprend un numéro de téléphone.

21. La méthode de la revendication 19 dans laquelle le serveur de portail de transaction (14) est en communication avec au moins deux serveurs commerciaux.

22. La méthode de la revendication 20 dans laquelle le moyen de paiement souhaité pour le produit comprend une carte de crédit.

23. La méthode de la revendication 20 dans laquelle la mise en vente d'un produit par un vendeur comprend la fourniture d'un lien hypertexte sur le serveur de portail de transaction (14) vers un serveur commercial (20).

24. Un système informatique pour une gestion des données d'une transaction électronique comprenant :
un serveur de portail de transaction (14) couplé à un serveur commercial (20) fourni par une application de caisse qui communique avec une base de données de produits et un système d'exécution de commandes se trouvant sur le serveur commercial (20), dans lequel le serveur de portail de transaction (14) est adapté pour recevoir des données de sélection identifiant un produit mis en vente par un vendeur (21) sur le serveur de portail de transaction (14) à partir d'un dispositif de communication à interface active (10) via un réseau de communication sans fil (30) couplé au serveur de portail de transaction (14) ;
dans lequel le serveur commercial (20) est adapté pour fournir des données d'informations produit comprenant des informations décrivant au moins un aspect du produit au dispositif de communication à interface active (10) à partir de la base de données de produits se trouvant sur le serveur commercial (20) via le réseau de communication sans fil (30) couplé au serveur de portail de transaction (14) ;
dans lequel l'application de caisse du serveur commercial (20) est adaptée pour recevoir des données de détails d'expédition comprenant des instructions relatives à l'expédition du produit à un destinataire désigné via le serveur de portail de transaction (14) d'un serveur de portefeuille électronique (16) associé au serveur de portail de transaction (14) et couplé à un processeur de paiement (18) ;
dans lequel l'application de caisse du serveur commercial (20) est adaptée pour recevoir des données d'option de paiement comprenant des informations décrivant un moyen de paiement souhaité pour le produit du dispositif de communication à interface active (10) via le réseau de communication sans fil (30) couplé au serveur de portail de transaction (14) ;
dans lequel le serveur de portail de transaction (14) est en outre adapté pour transmettre une autorisation de paiement à un processeur de paiement (18), dans lequel l'autorisation de paiement comprend des données d'identification de l'acheteur et des données d'identification du vendeur identifiant le vendeur ;
dans lequel le processeur de paiement (18) est adapté pour fournir une autorisation au portail de transaction électronique (15) du serveur de portail de transaction (14) ; et
dans lequel le serveur de portail de transaction (14) est en outre adapté pour transmettre des informations de commande au système d'exécution de commandes se trouvant sur le serveur commercial (20) via l'application de caisse du serveur commercial (20), dans lequel les informations de commande comprennent des données d'option de paiement et des données de détails d'expédition.

25. La méthode de la revendication 24 comprenant en outre une entrée dans une coparticipation entre un fournisseur du serveur de portail de transaction (14) et un fournisseur du réseau de communication sans fil (30).

26. La méthode de la revendication 25 comprenant en outre la fourniture du serveur de portail de transaction (14) en communication avec le réseau de communication sans fil (30).

27. La méthode de la revendication 26 comprenant en outre la fourniture à l'abonné d'un accès au serveur de portail de transaction (14).

28. La méthode de la revendication 27 comprenant en outre la réception par l'opérateur du réseau de communication sans fil (30) des données de facturation reflétant une transaction entre le vendeur et l'abonné et fournissant une facture à l'abonné comprenant les données de facturation.

29. La méthode de la revendication 28 dans laquelle la facture comprend en outre une facturation de services de communication.

30. La méthode de la revendication 29 dans laquelle des services de communication comprennent un service de téléphonie mobile.

31. La méthode de la revendication 30 dans laquelle le fournisseur du réseau de communication sans fil (30) comprend un opérateur de réseau de téléphonie mobile.

32. La méthode de la revendication 31 dans laquelle le fournisseur du serveur de portail de transaction (14) comprend une banque.

33. La méthode de la revendication 24 comprenant en outre la détermination d'un taux de change et le calcul de l'équivalent du montant du transfert dans la devise utilisée dans le lieu géographique du compte associé au deuxième dispositif de communication à interface active.
